# EUROPEAN PATENT APPLICATION

(11) **EP 1 462 290 A2**
(43) Date of publication of application: **29.09.2004**
(21) Application number: 04251701.1
(22) Date of filing: 24.03.2004
(51) Int. Cl.: B60K 15/04

(54) **Fuel supply structure of working machine**

(30) Priority: 25.03.2003 JP 2003082322
(71) Applicant: KOBELCO CONSTRUCTION MACHINERY CO., LTD., Hiroshima-shi, Hiroshima 731-0138 (JP)
(72) Inventor: Yamamoto, Keiji, c/o Kobelco Construction, Hiroshima-shi Hiroshima (JP)
(74) Representative: Brookes Batchellor

(57) **Abstract**

In a fuel supply structure of a working machine according to the present invention, a hollow connection box (13) which also serves as a sub-tank is integrally formed at a lower end portion of a filler neck (12) which forms a fuel supply port (11). A connection port (14) is formed in one side wall of the connection box and a fuel supply pipe (15) is connected to the connection port. According to this construction, a suitable direction for connection of the filler neck (12) and the fuel supply pipe (15) can be selected and thus it is possible to enhance the piping freedom.

## Description

### BACKGROUND OF THE INVENTION

### (FIELD OF THE INVENTION)

The present invention relates to a fuel supply structure of a working machine.

### (DESCRIPTION OF THE RELATED ART)

In a hydraulic excavator, a fuel tank and a filler neck which forms a fuel supply port are disposed apart from each other and are connected with each other through a fuel supply pipe.

In this case, straight connections are formed respectively in the filler neck and the fuel supply pipe and are connected with each other through a joint, or as is disclosed in Japanese Patent Application Laid Open No. 2001-288778, the connection of the filler neck is formed rather long, then the fuel supply pipe is fitted thereon and is fixed using a band.

In both cases, the filler neck is in an upwardly elongated state, so that the direction of connection with the fuel supply pipe is also limited to the vertical direction. Consequently, it is required that the pipe be bent forcibly from the connection toward the tank.

Thus, for the connection of the filler neck and the fuel supply pipe, it is necessary to ensure at least the length of the straight portion (from an upper end of the filler neck to a lower end of the connection of the fuel supply pipe) for connection of the two plus the length required for minimum bending of the fuel supply pipe. In a working machine without having a sufficient space in the vertical direction and difficult to ensure a sufficient connection height, it is necessary to change the layout of devices, thus resulting in the piping freedom becoming narrow and the piping work becoming troublesome.

### SUMMARY OF THE INVENTION

It is an object of the present invention to provide a fuel supply structure of a working machine capable of enhancing the piping freedom.

The fuel supply structure of a working machine according to the present invention comprises, as a basic construction, a fuel tank, a fuel supply conduit having a fuel supply port at its one end, and a hollow connection box formed at and in communication with the other end of the fuel supply conduit. The connection box has a projecting portion for connection which acts as a connection port. Further provided is a fuel supply pipe connected to the projecting portion for connection and communicating with the fuel tank.

According to this construction, the fuel supply pipe is connected to the connection box and therefore its connecting direction can be selected from among various directions; for example, it may be a direction in which the connection can be done most easily, or a direction in which the distance up to the tank is the shortest. Thus, it is possible to widen the piping freedom.

Particularly in a small-sized working machine without having a sufficient space for installation of devices, including such as engine and tanks, the piping work becomes easier.

### BRIEF DESCRIPTION OF THE DRAWINGS

Fig. 1 is a sectional view of a connection between a filler neck and a fuel supply pipe in a first embodiment of the present invention;
Fig. 2 is a perspective view showing an integral combination as one unit of the filler neck and a connection box in the first embodiment;
Fig. 3 is a diagram corresponding to Fig. 1, showing a second embodiment of the present invention; and
Fig. 4 is a diagram corresponding to Fig. 1, showing a third embodiment of the present invention.

### DESCRIPTION OF THE PREFERRED EMBODIMENTS

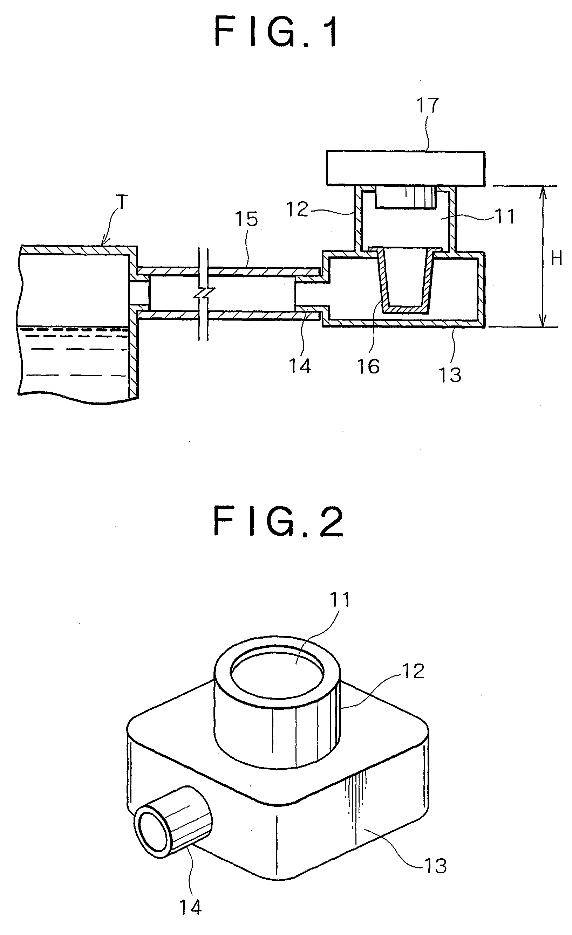

Fuel supply structures of a working machine according to the present invention will be described hereinunder with reference to Figs. 1 to 4.

Fig. 1 is a sectional view of a connection between a filler neck 12 as a fuel supply conduit and a fuel supply pipe 15, showing a first embodiment of the present invention. The fuel supply pipe 15 is connected to a fuel tank T, while the filler neck 12 has a fuel supply port 11 for refueling or the replenishment of fuel. A connection box 13 for connection between the filler neck 12 and the fuel supply pipe 15 is formed at a base end portion (lower end portion) of the filler neck 12 so as to communicate with the fuel supply port 11. More specifically, the connection box 13 is integrally formed as one unit with a projecting portion 14 for connection which acts as a connection port, and the fuel supply pipe 15 is connected to the projecting portion 14 for connection. The projecting portion 14 is for connection of the fuel supply pipe 15. Therefore, it is optional from which of inner and outer surfaces of the connection box 13 the projecting portion 14 is to be projected, insofar as it permits connection thereto of the fuel supply pipe 15.

The tank T may be arranged in such a manner that the tank T is lower than the box 13 by bending the pipe 15 although the tank T is arranged nearly side by side with the box 13 as described in Fig. 1.

In Fig. 1, the connection box 13 is in the shape of a somewhat flat, hollow rectangular parallelepiped, but no limitation is made thereto. The filler neck 12 and the connection box 13 are molded into one unit using a resin material such as a plastic material. By so doing, the manufacturing cost can be reduced despite the construction including the connection box 13.

In the first embodiment illustrated in Figs. 1 and 2, the projecting portion 14 for connection is formed on one side wall of the connection box 13. The fuel supply pipe 15 is connected substantially horizontally to the projecting portion 14 for connection. Since the projecting portion 14 for connection is formed on a side wall of the connection box 13, the filler neck 12 and the fuel supply pipe 15 are nearly perpendicular to each other so as to be nearly orthogonal to each other through the projecting portion 14 for connection.

Since the filler neck 12 and the fuel supply pipe 15 are thus connected perpendicularly to each other through the box 13, the connection height is much smaller than in the conventional case. This is advantageous particularly to a machine wherein it is difficult to ensure a sufficient space in the vertical direction.

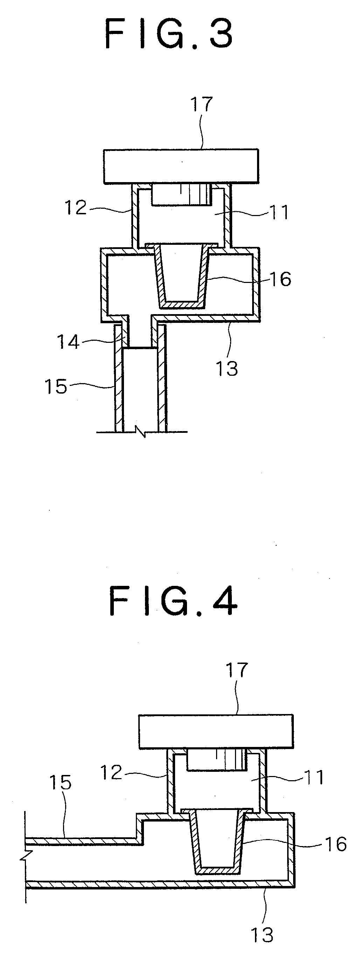

On the other hand, in a second embodiment illustrated in Fig. 3, a projecting portion 14 for connection is formed on a bottom wall of the connection box 13, and the fuel supply pipe 15 is connected vertically to the projecting portion 14 for connection.

In both first and second embodiments, as to a concrete position on the side wall (side face) or the bottom wall (bottom face) of the connection box 13 where the projecting portion 14 is to be formed, it can be set arbitrarily.

As the fuel supply pipe 15 there may be used a conventional fuel hose such as a rubber hose or a molded plastic hose called molded hose. Further, it is optional whether the fuel supply pipe 15 is to be fitted on the projecting portion 14 for connection and then fixed using a band or it is to be connected to the projecting portion 14 for connection with use of a joint.

In Figs. 1 and 3, the numeral 16 denotes a strainer which is disposed within the connection box 13 so as to face the fuel supply port 11, and numeral 17 denotes a cap which covers the fuel supply port 11. The strainer 16 eliminates foreign matters contained in fuel which is replenished.

Thus, the fuel supply pipe 15 may be connected to not the filler neck 12 but the connection box 13. Therefore, the direction in which the fuel supply pipe 15 is to be connected may be selected and determined arbitrarily from substantially horizontal direction (longitudinal and transverse directions in Figs. 1 and 2) and substantially vertical direction (Fig. 3) from a desired standpoint, for example from the standpoint that piping is easiest or the distance to the tank T is shortest.

That is, unlike the prior art, the connecting direction is not limited to the vertical direction, but it is possible to widen the piping freedom. Besides, it is not necessary to bend pipe forcibly. Thus, the piping work is simplified even in a small-sized working machine such as a compact excavator or an excavator of a small rotating radius type.

Particularly, in the first embodiment illustrated in Figs. 1 and 2, the fuel supply pipe 15 is connected nearly perpendicularly (horizontally) to the filler neck 12 through the box 13. Consequently, length from the upper end of the filler neck 12 to the lower surface of the connection box 13 suffices as the height (connection height) H required for the said connection. This connection height is much smaller than in the prior art. This is advantageous to a working machine wherein it is difficult to ensure a sufficient space in the vertical direction.

The connection box 13 can play the role of a sub-tank which stores a portion of fuel, whereby it is possible to substantially increase the capacity of the fuel tank T (by 500 cc or so for example).

Further, since the connection box 13 as a large volume chamber lies just under the fuel supply port 11, it is possible to prevent bubbling during the supply of fuel and hence improve the efficiency of the fuel supply work.

Next, Fig. 4 illustrates a third embodiment of the present invention. As shown in Fig. 4, the filler neck 12, the connection box 13 and the fuel supply pipe 15 may be formed as an integrally molded combination by integral molding of a plastic material. By so doing, the manufacturing cost can be reduced despite the construction including the connection box 13. Further, in the case where the connecting directions of the filler neck 12 and the fuel supply pipe 15 are determined in advance, the operation for connecting the two is not needed, so that the piping work is greatly simplified.

In the above embodiments the filler neck 12 and the connection box 13 are constituted as an integrally molded combination or one unit of a plastic material, but if they are to be made of metal, both may be formed separately and then combined by welding for example.

Though not shown, the connection box 13 may be formed with plural projecting portions 14 for connection. In this case, it is optional whether the projecting portions 14 for connection are to be formed on the same surface or on different surfaces. Of course, they may be formed on both (substantially horizontal and vertical directions). In this case, the filler neck 12 and the fuel supply pipe 15 may be connected together through a connection port which is suitable for piping, depending on each machine, and the other connection port may be closed with lid. As a result, one connection box 13 can cope with various directions.

Although the invention has been described with reference to the preferred embodiments in the attached figures, it is noted that equivalents may be employed and substitutions made herein without departing from the scope of the invention as recited in the claims.

## Claims

1. A fuel supply structure of a working machine, comprising:
a fuel tank;
a fuel supply conduit having a fuel supply port at its one end;
a hollow connection box formed at and in communication with the other end of the fuel supply conduit , said connection box having a projecting portion for connection which acts as a connection port; and
a fuel supply pipe connected to said projecting portion for connection and communicating with said fuel tank.

2. The fuel supply structure of a working machine according to claim 1, wherein said projecting portion for connection is formed on a side wall of said connection box, and said fuel supply pipe is connected to said projecting portion for connection in such a manner that said fuel supply pipe is nearly perpendicular to said fuel supply conduit.

3. A fuel supply structure of a working machine, comprising:
a fuel tank;
a fuel supply conduit having a fuel supply port at its one end;
a hollow connection box welded to the other end of said fuel supply conduit and communicating with said fuel supply port, said connection box having a projecting portion for connection which acts as a connection port; and
a fuel supply pipe connected to said projecting portion for connection and communicating with said fuel tank.

4. The fuel supply structure of a working machine according to claim 1, wherein said fuel supply conduit and said connection box are formed of resin and are molded into one unit.

5. The fuel supply structure of a working machine according to claim 1, wherein said fuel supply conduit, said connection box and said fuel supply pipe are formed of resin and are molded into one unit.
